# EUROPEAN PATENT SPECIFICATION

(11) **EP 1 726 359 B1**
(45) Date of publication and mention of the grant of the patent: **15.04.2020**
(21) Application number: 06004020.1
(22) Date of filing: 28.02.2006
(51) Int. Cl.: B01J 21/06, B01J 23/40, B01J 23/63, B01J 35/04, B01J 37/02

(54) **Exhaust gas-purifying catalyst**
Abgasreinigungskatalysator
Catalyseur de purification des gaz d'échappement

(30) Priority: 27.05.2005 JP 2005155780
(43) Date of publication of application: 29.11.2006
(73) Proprietor: Cataler Corporation, Shizuoka-ken 437-1492 (JP)
(72) Inventor: Sato, Noboru, Kakegawa-shi Shizuoka 437-1492 (JP); Mizukami, Tomohito, Kakegawa-shi Shizuoka 437-1492 (JP); Taki, Kenichi, Kakegawa-shi Shizuoka 437-1492 (JP); Suzuki, Hiromasa, Kakegawa-shi Shizuoka 437-1492 (JP)
(74) Representative: Mai Dörr Besier European Patent Attorneys

(56) References cited:
- EP-A- 0 428 752
- EP-A- 1 136 115
- GB-A- 2 376 903
- US-A- 5 888 464

## Description

The present invention relates to an exhaust gas-purifying catalyst.

Conventionally, various types of three-way catalysts are used to purify the exhaust gas of automotive vehicle such as an automobile. For example, International Publication No. WO90/14887 discloses an exhaust gas-purifying catalyst which has at least two catalytic component layers on a support. The inner catalytic component layer contains a catalytic component including at least one element of the platinum group, activated alumina, and cerium oxide. The outer catalytic component layer contains a catalytic component including at least one element of the platinum group, and activated alumina. At least one of the inner and outer catalytic component layers further contains a coprecipitated oxide of zirconium stabilized by cerium.

Japanese Patent No. 3330154 discloses an exhaust gas-purifying catalyst, which is obtained by forming an alumina coating layer on an inorganic refractory catalyst support. The alumina coating layer contains one or more catalytic components selected from the group consisting of platinum, palladium, and rhodium. In addition to the catalytic component, the alumina coating layer contains 10 to 40 wt% of a composite oxide and 2 to 20 wt% of lanthanum oxide with respect to the whole alumina coating layer. A solid solution is used as the composite oxide, which is obtained by mixing 5 to 15 wt% of zirconium oxide with cerium oxide having a grain size of 50 to 300Å.

Jpn. Pat. Appln. KOKAI Publication No. 2003-299967 discloses a structure of catalyst support obtained by coating a monolithic support with a layer of cerium-zirconium composite oxide. The layer is made up of at least two layers. The Ce/Zr molar ratio in the upper cerium-zirconium composite oxide layer is 1/1 or more. The Ce/Zr molar ratio in the upper cerium-zirconium composite oxide layer is higher than that in the lower cerium-zirconium composite oxide layer.

Recently, emission standards have been tightened throughout the world. Accordingly, automobiles and the like are being required to further reduce the emissions of, e.g., hydrocarbons (HC), carbon monoxide (CO), and nitrogen oxide (NOx). The exhaust gas-purifying catalysts disclosed in the International Publication No. WO90/14887 , Japanese Patent No. 3330154 , and Jpn. Pat. Appln. KOKAI Publication No. 2003-299967 achieve satisfactory performance in a cold transient (CT) phase. However, these catalysts do not necessarily achieve satisfactory performance in a hot transient (HT) phase. To reduce the emissions, it is necessary to improve the exhaust gas purification performance in the HT phase.

EP 1 136 115 A1 discloses the principle of using both an upstream side and a downstream side catalyst. However, EP 1 136 115 A1 is focused to the improvement of NOx and CO purification performance while maintaining performacce of the HC.

EP 0 428 751 A1 is directed to improvement of purification after a prolonged, high-temperature service, however, according to EP 0 428 752 A1, there can be applied oxides containing only a rare earth element as a metal element.

An object of the present invention is to provide an exhaust gas-purifying catalyst, which achieves satisfactory performance in the HT phase.

According to the the present invention, there is provided an exhaust gas-purifying catalyst, comprising a support substrate, a first catalyst support layer formed on the support substrate and containing a composite oxide of a first rare earth element and zirconium, a first catalytic metal supported by the first catalyst support layer, a second catalyst support layer formed on the first catalyst support layer and containing a composite oxide of a second rare earth element and zirconium, and a second catalytic metal supported by the second catalyst support layer and differing from the first catalytic metal, wherein all oxides containing the first rare earth element are composite oxides of the first rare earth element and zirconium in which the atomic ratio of zirconium to the first rare earth element is 0.8 or more, and all oxides containing the second rare earth element are composite oxides of the second rare earth element and zirconium in which the atomic ratio of zirconium to the second rare earth element is 0.8 or more, and the exhaust gas-purifying catalyst does not contain any composite in which an atomic ratio of zirconium to a rare earth element is lower than 0.8 and any oxide containing only a rare earth element as a metal element, and the exhaust gas-purifying catalyst (10) contains only the composite oxide (21) and the composite oxide (31) as an oxide containing rare earth element.

The invention can be more fully understood from the following detailed description when taken in conjunction with the accompanying drawings, in which:
FIG. 1 is a view schematically showing an exhaust gas-purifying catalyst according to an embodiment of the present invention;
FIG. 2 is a sectional view schematically showing the exhaust gas-purifying catalyst shown in FIG. 1;
FIG. 3 is a view schematically showing an inner layer of the catalyst shown in FIG. 1;
FIG. 4 is a view schematically showing an outer layer of the catalyst shown in FIG. 1; and
FIG. 5 is a graph showing the relationship between the zirconium content and the NMHC emission.

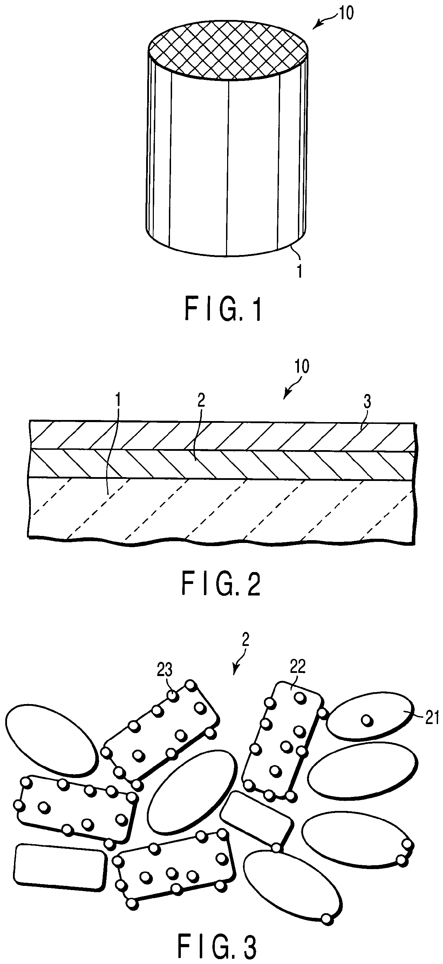

FIG. 1 is a view schematically showing an exhaust gas-purifying catalyst according to the embodiment of the present invention. FIG. 2 is a sectional view schematically showing the exhaust gas-purifying catalyst shown in FIG. 1. The exhaust gas-purifying catalyst 10 is a monolithic catalyst. The monolithic catalyst 10 includes a cylindrical support substrate 1 having a honeycomb structure in which a large number of fine through-holes are formed. The shape of the support substrate 1 may be a rectangular parallelepiped. The support substrate 1 is typically made of ceramics such as cordierite. Alternatively, the support substrate 1 may be made of metal.

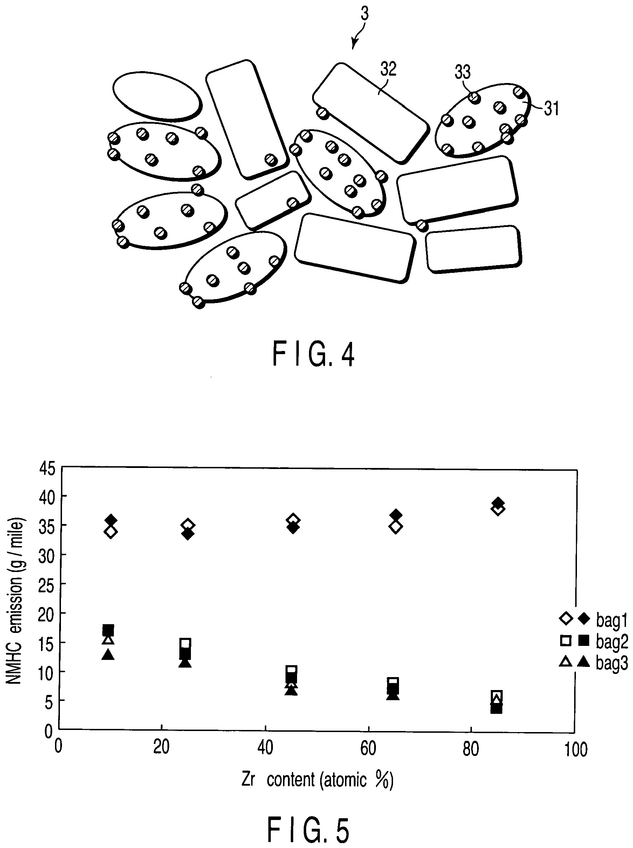

As shown in FIG. 2, a first catalyst support layer (inner layer) 2 is formed on walls of the support substrate 1, and a second catalyst support layer (outer layer) 3 is formed on the inner layer 2. The inner layer 2 and outer layer 3 will be explained below with reference to FIGS. 3 and 4, respectively.

FIG. 3 is a view schematically showing the inner layer of the catalyst shown in FIG. 1. FIG. 4 is a view schematically showing the outer layer of the catalyst shown in FIG. 1. The inner layer 2 contains a composite oxide 21 of a rare earth element and zirconium, and alumina 22. The inner layer 2 supports a first catalytic metal 23. The outer layer 3 contains a composite oxide 31 of a rare earth element and zirconium, and alumina 32. The outer layer 3 supports a second catalytic metal 33. As an example, most of the first catalytic metals 23 are supported by the alumina 22 in FIG. 3, and most of the second catalytic metals 33 are supported by the composite oxide 31 in FIG. 4.

The composite oxides 21 and 31 and alumina 22 and 32, which are catalyst supports, increase the specific surface area of the catalytic metals, and suppress sintering of the catalytic metals by radiating the heat generated by the catalytic reaction. In each of the composite oxides 21 and 31, the atomic ratio R of zirconium to the rare earth element is 0.8 or more.

The catalytic metals 23 and 33 are different types of precious metals. Examples of the catalytic metals 23 and 33 are rhodium (Rh), platinum (Pt), palladium (Pd), and their mixtures. The catalytic metals 23 and 33 accelerate the reducing reaction of NOₓ and the oxidation reactions of CO and HC. Typically, the catalytic metal 23 is Pt or Pd, and the catalytic metal 33 is Rh.

As an oxide containing a rare earth element, the monolithic catalyst 10 contains only the composite oxides 21 and 31 of a rare earth element and zirconium, in each of which the atomic ratio R of zirconium to the rare earth element is 0.8 or more. When the monolithic catalyst 10 contains the composite oxides 21 and 31 and does not contain any composite oxide in which the atomic ratio R is lower than 0.8 and any oxide containing only a rare earth element as a metal element, this monolithic catalyst achieves satisfactory exhaust gas purification performance in the HT phase.

The atomic ratio R typically falls within a range from 1 to 20. If the atomic ratio R is low, the exhaust gas purification performance in the HT phase may become unsatisfactory. If the atomic ratio R is high, the exhaust gas purification performance in the CT phase may become unsatisfactory.

Note that a portion of zirconium contained in the catalyst support layers 2 and 3 generally exists in the form of zirconium oxide. Typically, 90 wt% or more of zirconium exist in the form of a composite oxide of zirconium and a rare earth element.

Examples of the rare-earth element are La, Ce, Pr, Nd, Pm, Sm, Eu, Gd, Tb, Dy, Ho, Er, Tm, Yb, Lu, Sc, and Y. It is possible to use only one of rare-earth elements. Alternatively, two or more of rare-earth elements may be used.

The weight ratios of the alumina 22 and 32 to the composite oxides 21 and 31 in the catalyst support layers 2 and 3 typically fall within a range from 1/200 to 200/1. If the weight ratio of alumina to the composite oxide is low, the catalyst support layer may peel off. If the weight ratio of alumina to the composite oxide is high, the performance of the catalyst in the HT phase tends to deteriorate. The weight ratio of alumina to the composite oxide in the catalyst support layer preferably falls within a range from 1/20 to 20/1.

The weight ratio of alumina to the composite oxide in the inner layer 2 and that in the outer layer 3 may be the same or different. For example, the weight ratio in the outer layer 3 may be higher than that in the inner layer 2.

The exhaust gas-purifying catalyst 10 can be manufactured by, e.g., the following method.

First, an aqueous solution of a rare earth element salt and an aqueous solution of a zirconium salt are mixed such that the molar ratio of zirconium to the rare earth element is 0.8 or more. Assume, for example, that an aqueous cerium nitrate solution and an aqueous zirconium nitrate solution are mixed. Then, an aqueous ammonia solution is added to the mixture to obtain a coprecipitate of cerium and zirconium. After that, this coprecipitate is fired to obtain composite oxides 21 and 31 of cerium and zirconium.

Then, the composite oxide 21, a solution containing a catalytic metal salt, and the alumina 22 are mixed to prepare a first slurry. Also, the composite oxide 31, a solution containing a catalytic metal salt, and the alumina 32 are mixed to prepare a second slurry. When the catalytic metal is Pd, an aqueous palladium nitrate solution or the like can be used as the solution containing a catalytic metal salt. When the catalytic metal is Rh, an aqueous rhodium nitrate solution or the like can be used. When the catalytic metal is Pt, an aqueous dinitrodiamino platinum solution or the like can be used.

Subsequently, the support substrate 1 is immersed in the first slurry to form a coating film on the surface of the support substrate 1. After this coating film is dried, another coating film is formed on the surface of the support substrate 1 following the same method as above except that the second slurry is used. This coating film is dried, and fired if necessary. In this manner, the exhaust gas-purifying catalyst 10 is obtained.

The method of manufacturing the exhaust gas-purifying catalyst 10 is not limited to the above method. For example, the exhaust gas-purifying catalyst 10 may be manufactured as follows.

First, the alumina 22 and a solution containing a first catalytic metal salt are mixed, and the mixture is dried and fired to obtain alumina 22 which supports the catalytic metal 23. Similarly, the composite oxide 31 obtained as described above and a solution containing a second catalytic metal salt are mixed, and the mixture is dried and fired to obtain a composite oxide 31 which supports the catalytic metal 33. The solution containing the first catalytic metal salt is, e.g., an aqueous palladium nitrate solution or aqueous dinitrodiamino platinum solution. The solution containing the second catalytic metal salt is, e.g., an aqueous rhodium nitrate solution.

Then, the composite oxide 21 obtained as described above, the alumina 22 which supports the catalytic metal 23, and water are mixed to prepare a first slurry. On the other hand, the composite oxide 31 which supports the catalytic metal 33, the alumina 32, and water are mixed to prepare a second slurry.

Subsequently, the support substrate 1 is immersed in the first slurry to form a coating film on the surface of the support substrate 1. After this coating film is dried, another coating film is formed on the surface of the support substrate 1 following the same method as above except that the second slurry is used. This coating film is dried, and fired if necessary. In this manner, the exhaust gas-purifying catalyst 10 is obtained.

Although FIG. 2 shows an embodiment in which the number of catalyst support layers is two, the number of catalyst support layers may be one or more than two.

In this embodiment, the present invention is applied to a monolithic catalyst. However, the present invention is applicable to another catalyst.

Examples of the present invention will be explained below.

### <Manufacture of exhaust gas-purifying catalyst>

### (Example 1)

A composite oxide X of zirconium and rare earth elements was manufactured by the method explained previously. The manufactured composite oxide X contained cerium (Ce), lanthanum (La), and neodymium (Nd) as rare earth elements. Also, a ratio R of the number of zirconium atoms to the sum of the numbers of Ce atoms, La atoms, and Nd atoms was 85/15.

To prepare a slurry A, 50g of alumina, a Pd nitrate solution (Pd content = 1g), and 100g of the composite oxide X were mixed. A monolithic honeycomb support (volume = 1 L) was coated with the slurry A, and the resultant structure was dried at 250°C for 1 hr.

Then, 90g of alumina, an Rh nitrate solution (Rh content = 0.2g), and 70g of the composite oxide X were mixed to prepare a slurry B. The monolithic honeycomb support coated with the slurry A was further coated with the slurry B, and the resultant structure dried at 250°C for 1 hr. After that, the resultant structure was fired at 500°C for 1 hr to obtain a catalyst of Example 1. The compositions of the obtained catalyst were as follows:
Outer layer: Rh 0.2g, alumina 90g, composite oxide X (R = 85/15) 70g
Inner layer: Pd 1.0g, alumina 50g, composite oxide X (R = 85/15) 100g

### (Example 2)

To prepare a slurry C, 50g of alumina, a dinitrodiamino Pt solution (Pt content = 1g), and 100g of the composite oxide X were mixed. A monolithic honeycomb support (volume = 1 L) was coated with the slurry C, and the resultant structure was dried at 250°C for 1 hr.

The monolithic honeycomb support coated with the slurry C was further coated with the slurry B, and the resultant structure was dried at 250°C for 1 hr. After that, the resultant structure was fired at 500°C for 1 hr to obtain a catalyst of Example 2. The compositions of the obtained catalyst were as follows:
Outer layer: Rh 0.2g, alumina 90g, composite oxide X (R = 85/15) 70g
Inner layer: Pt 1.0g, alumina 50g, composite oxide X (R = 85/15) 100g

### (Example 3)

A composite oxide Y of zirconium and rare earth elements was manufactured following the same procedures as in Example 1 except that the mixing amount of the rare earth element salts was changed. That is, in this example, the ratio R of the number of zirconium atoms to the sum of the numbers of Ce atoms, La atoms, and Nd atoms was 65/35.

To prepare a slurry D, 50g of alumina, a Pd nitrate solution (Pd content = 1g), and 100g of the composite oxide Y were mixed. A monolithic honeycomb support (volume = 1 L) was coated with the slurry D, and the resultant structure was dried at 250°C for 1 hr.

The monolithic honeycomb support coated with the slurry D was further coated with the slurry B, and the resultant structure was dried at 250°C for 1 hr. After that, the resultant structure was fired at 500°C for 1 hr to obtain a catalyst of Example 3. The compositions of the obtained catalyst were as follows:
Outer layer: Rh 0.2g, alumina 90g, composite oxide X (R = 85/15) 70g
Inner layer: Pd 1.0g, alumina 50g, composite oxide Y (R = 65/35) 100g

### (Example 4)

To prepare a slurry E, 50g of alumina, a dinitrodiamino Pt solution (Pt content = 1g), and 100g of the composite oxide Y were mixed. A monolithic honeycomb support (volume = 1 L) was coated with the slurry E, and the resultant structure was dried at 250°C for 1 hr.

The monolithic honeycomb support coated with the slurry E was further coated with the slurry B, and the resultant structure was dried at 250°C for 1 hr. After that, the resultant structure was fired at 500°C for 1 hr to obtain a catalyst of Example 4. The compositions of the obtained catalyst were as follows:
Outer layer: Rh 0.2g, alumina 90g, composite oxide X (R = 85/15) 70g
Inner layer: Pt 1.0g, alumina 50g, composite oxide Y (R = 65/35) 100g

### (Example 5)

A composite oxide Z of zirconium and rare earth elements was manufactured following the same procedures as in Example 1 except that the mixing amount of the rare earth element salts was changed. That is, in this example, the ratio R of the number of zirconium atoms to the sum of the numbers of Ce atoms, La atoms, and Nd atoms was 45/55.

To prepare a slurry F, 50g of alumina, a Pd nitrate solution (Pd content = 1g), and 100g of the composite oxide Z were mixed. A monolithic honeycomb support (volume = 1 L) was coated with the slurry F, and the resultant structure was dried at 250°C for 1 hr.

The monolithic honeycomb support coated with the slurry F was further coated with the slurry B, and the resultant structure was dried at 250°C for 1 hr. After that, the resultant structure was fired at 500°C for 1 hr to obtain a catalyst of Example 5. The compositions of the obtained catalyst were as follows:
Outer layer: Rh 0.2g, alumina 90g, composite oxide X (R = 85/15) 70g
Inner layer: Pd 1.0g, alumina 50g, composite oxide Z (R = 45/55) 100g

### (Example 6)

To prepare a slurry G, 50g of alumina, a dinitrodiamino Pt solution (Pt content = 1g), and 100g of the composite oxide Z were mixed. A monolithic honeycomb support (volume = 1 L) was coated with the slurry G, and the resultant structure was dried at 250°C for 1 hr.

The monolithic honeycomb support coated with the slurry G was further coated with the slurry B, and the resultant structure was dried at 250°C for 1 hr. After that, the resultant structure was fired at 500°C for 1 hr to obtain a catalyst of Example 6. The compositions of the obtained catalyst were as follows:
Outer layer: Rh 0.2g, alumina 90g, composite oxide X (R = 85/15) 70g
Inner layer: Pt 1.0g, alumina 50g, composite oxide Z (R = 45/55) 100g

### (Example 7)

To obtain a Pd-supporting alumina powder, 50g of alumina and a Pd nitrate solution (Pd content = 1g) were mixed and the mixture was fired. This Pd-supporting alumina powder, 100g of the composite oxide X, and water were mixed to prepare a slurry J. A monolithic honeycomb support (volume = 1 L) was coated with the slurry J, and the resultant structure was dried at 250°C for 1 hr.

To obtain an Rh-supporting composite oxide powder, 100g of the composite oxide X and an aqueous Rh nitrate solution (Rh content = 0.2g) were mixed and the mixture was fired. This Rh-supporting composite oxide powder, 90g of alumina, and water were mixed to prepare a slurry K. The monolithic honeycomb support coated with the slurry J was further coated with the slurry K, and the resultant structure was dried at 250°C for 1 hr. After that, the resultant structure was fired at 500°C for 1 hr to obtain a catalyst of Example 7. The compositions of the obtained catalyst were as follows:
Outer layer: Rh 0.2g, alumina 90g, composite oxide X (R = 85/15) 70g
Inner layer: Pd 1.0g, alumina 50g, composite oxide X (R = 85/15) 100g

### (Comparative Example 1)

A composite oxide W of zirconium and rare earth elements was manufactured following the same procedures as in Example 1 except that the mixing amount of the rare earth element salts was changed. That is, in this example, the ratio R of the number of zirconium atoms to the sum of the numbers of Ce atoms, La atoms, and Nd atoms was 25/75.

To prepare a slurry H, 50g of alumina, a Pd nitrate solution (Pd content = 1g), and 100g of the composite oxide W were mixed. A monolithic honeycomb support (volume = 1 L) was coated with the slurry H, and the resultant structure was dried at 250°C for 1 hr.

The monolithic honeycomb support coated with the slurry H was further coated with the slurry B, and the resultant structure was dried at 250°C for 1 hr. After that, the resultant structure was fired at 500°C for 1 hr to obtain a catalyst of Comparative Example 1. The compositions of the obtained catalyst were as follows:
Outer layer: Rh 0.2g, alumina 90g, composite oxide X (R = 85/15) 70g
Inner layer: Pd 1.0g, alumina 50g, composite oxide W (R = 25/75) 100g

### (Comparative Example 2)

To prepare a slurry I, 50g of alumina, a dinitrodiamino Pt solution (Pt content = 1g), and 100g of the composite oxide W were mixed. A monolithic honeycomb support (volume = 1 L) was coated with the slurry I, and the resultant structure was dried at 250°C for 1 hr.

The monolithic honeycomb support coated with the slurry I was further coated with the slurry B, and the resultant structure was dried at 250°C for 1 hr. After that, the resultant structure was fired at 500°C for 1 hr to obtain a catalyst of Comparative Example 2. The compositions of the obtained catalyst were as follows:
Outer layer: Rh 0.2g, alumina 90g, composite oxide X (R = 85/15) 70 g
Inner layer: Pt 1.0g, alumina 50g, composite oxide W (R = 25/75) 100 g

### (Comparative Example 3)

A composite oxide Q of zirconium and rare earth elements was manufactured following the same procedures as in Example 1 except that the mixing amount of the rare earth element salts was changed. That is, in this example, the ratio R of the number of zirconium atoms to the sum of the numbers of Ce atoms, La atoms, and Nd atoms was 10/90.

To prepare a slurry L, 50g of alumina, a Pd nitrate solution (Pd content = 1g), and 100g of the composite oxide Q were mixed. A monolithic honeycomb support (volume = 1 L) was coated with the slurry L, and the resultant structure was dried at 250°C for 1 hr.

The monolithic honeycomb support coated with the slurry L was further coated with the slurry B, and the resultant structure was dried at 250°C for 1 hr. After that, the resultant structure was fired at 500°C for 1 hr to obtain a catalyst of Comparative Example 3. The compositions of the obtained catalyst were as follows:
Outer layer: Rh 0.2g, alumina 90g, composite oxide X (R = 85/15) 70g
Inner layer: Pd 1.0g, alumina 50g, composite oxide Q (R = 10/90) 100g

### (Comparative Example 4)

To prepare a slurry M, 50g of alumina, a dinitrodiamino Pt solution (Pt content = 1g), and 100g of the composite oxide Q were mixed. A monolithic honeycomb support (volume = 1 L) was coated with the slurry M, and the resultant structure was dried at 250°C for 1 hr.

The monolithic honeycomb support coated with the slurry M was further coated with the slurry B, and the resultant structure was dried at 250°C for 1 hr. After that, the resultant structure was fired at 500°C for 1 hr to obtain a catalyst of Comparative Example 4. The compositions of the obtained catalyst were as follows:
Outer layer: Rh 0.2g, alumina 90g, composite oxide X (R = 85/15) 70g
Inner layer: Pt 1.0g, alumina 50g, composite oxide Q (R = 10/90) 100g

### <Tests>

Each exhaust gas-purifying catalyst according to Examples 1 to 7 and Comparative Examples 1 to 4 was mounted in an automobile having an engine whose piston displacement was 2.2-L. The automobile was driven in the LA#4 mode, and the HC, CO, and NOₓ emissions of the automobile were measured. The following table shows the emissions of non-methane hydrocarbons (NMHC) obtained for bag1 to bag3. In addition, the results obtained for the catalysts according to Examples 1 to 6 and Comparative Examples 1 to 4 are summarized in FIG. 5. Referring to FIG. 5, the ordinate indicates the NMHC emission (mg/mile), and the abscissa indicates the zirconium content (atomic%) in the composite oxide. Also, solid rhombus, square, and triangle indicate the results obtained for the catalysts containing Rh and Pt as the catalytic metals, and open rhombus, square, and triangle indicate the results obtained for the catalysts containing Rh and Pd as the catalytic metals.

**Table**

| | Ratio R | | Catalytic metal | NMHC emission (mg/mile) | | |
|---|---|---|---|---|---|---|
| | Outer layer | Inner layer | | bag1 | bag2 | bag3 |
| Example 1 | 85/15 | 85/15 | Rh, Pd | 38 | 6 | 5 |
| Example 2 | 85/15 | 85/15 | Rh, Pt | 39 | 4 | 4 |
| Example 3 | 85/15 | 65/35 | Rh, Pd | 35 | 8 | 7 |
| Example 4 | 85/15 | 65/35 | Rh, Pt | 37 | 7 | 6 |
| Example 5 | 85/15 | 45/55 | Rh, Pd | 36 | 10 | 8 |
| Example 6 | 85/15 | 45/55 | Rh, Pt | 35 | 9 | 7 |
| Example 7 | 85/15 | 85/15 | Rh, Pd | 36 | 5 | 5 |
| Comparative Example 1 | 85/15 | 25/75 | Rh, Pd | 35 | 15 | 13 |
| Comparative Example 2 | 85/15 | 25/75 | Rh, Pt | 34 | 13 | 12 |
| Comparative Example 3 | 85/15 | 10/90 | Rh, Pd | 34 | 17 | 16 |
| Comparative Example 4 | 85/15 | 10/90 | Rh, Pt | 36 | 17 | 13 |

"LA#4 mode" is a test mode in the U.S.A., which is defined in the Federal Test Procedure FTP75. Also, in the table and FIG. 5, "bag1" indicates the exhaust gases sampled in the CT phase of the test, "bag2" indicates the exhaust gases sampled in the stabilized (S) phase, and "bag3" indicates the exhaust gases sampled in the HT phase.

As shown in the table and FIG. 5, it was possible to reduce the NMHC emissions in the HT and S phases when the catalysts of Examples 1 to 7 were used. In addition, similar results were obtained for the CO and NOₓ emissions. From these results, it was confirmed that the catalysts of Examples 1 to 7 achieved satisfactory exhaust gas purification performance in the HT phase. Also, the catalyst of Example 7 in which Rh was supported by the composite oxide and Pd was supported by alumina had a notable effect of reducing the NMHC emissions in the CT and S phases.

By contrast, when the catalysts of Comparative Examples 1 to 4, in each of which the inner layer contained the composite oxide having an atomic ratio of zirconium to rare earth elements lower than 0.8, were used, the NMHC emissions in the HT phase were larger than those obtained when the catalysts of Examples 1 to 7 were used.

## Claims

1. An exhaust gas-purifying catalyst (10), **characterized by** comprising:
a support substrate (1);
a first catalyst support layer (2) formed on the support substrate (1) and
containing a composite oxide (21) of a first rare earth element and zirconium;
a first catalytic metal (23) supported by the first catalyst support layer (2);
a second catalyst support layer (3) formed on the first catalyst support layer (2) and containing a composite oxide (31) of a second rare earth element and zirconium; and
a second catalytic metal (33) supported by the second catalyst support layer (3) and differing from the first catalytic metal (23),
wherein all oxides containing the first rare earth element are composite oxides of the first rare earth element and zirconium in which an atomic ratio of zirconium to the first rare earth element is equal to or higher than 0.8, and all oxides containing the second rare earth element are composite oxides of the second rare earth element and zirconium in which an atomic ratio of zirconium to the second rare earth element is equal to or higher than 0.8, and
the exhaust gas-purifying catalyst (10) does not contain any composite oxide in which an atomic ratio of zirconium to a rare earth element is lower than 0.8 and any oxide containing only a rare earth element as a metal element, and
the exhaust gas-purifying catalyst (10) contains only the composite oxide (21) and the composite oxide (31) as an oxide containing rare earth element.

2. A catalyst (10) according to claim 1, **characterized in that** at least one of the first and second rare earth elements is at least one element selected from the group consisiting of La, Ce, Pr, Nd, Pm, Sm, Eu, Gd, Tb, Dy, Ho, Er, Tm, Yb, Lu, Sc and Y.

3. A catalyst (10) according to claim 1 or 2, **characterized in that** the first catalytic metal (23) contains one of Pt and Pd, and the second catalytic metal (33) contains Rh.

4. A catalyst (10) according to any of claims 1 to 3, **characterized in that** at least one of the first and second catalyst support layers (2, 3) further contains alumina (22, 32) and a weight ratio of the alumina (22, 32) to the composite oxide (21, 31) in the catalyst support layer (2, 3) falls within a range from 1/200 to 200/1.

5. A catalyst (10) according to any one of claims 1 to 3, **characterized in that** the first catalyst support layer (2) further contains alumina (22), the alumina (22) supports the first catalytic metal (23), and the composite oxide (31) of the second rare earth element and zirconium supports the second catalytic metal (33).

## Patentansprüche

1. Abgasreinigungskatalysator (10), **dadurch gekennzeichnet, dass** er umfasst:
Ein Trägersubstrat (1);
eine auf dem Trägersubstrat (1) ausgebildete erste Katalysatorträgerschicht (2) enthaltend ein Mischoxid (21) eines ersten Seltenerdelements und Zirkonium;
ein erstes katalytisches Metall (23), das von der ersten Katalysatorträgerschicht (2) geträgert wird;
eine zweite Katalysatorträgerschicht (3), die auf der ersten Katalysatorträgerschicht (2) ausgebildet ist und ein Mischoxid (31) eines zweiten Seltenerdelements und Zirkonium enthält; und
ein zweites katalytisches Metall (33), das von der zweiten Katalysatorträgerschicht (3) geträgert wird und vom ersten katalytischen Metall (23) verschieden ist,
wobei alle Oxide, die das erste Seltenerdelement enthalten, Mischoxide des ersten Seltenerdelements und von Zirkonium sind, in denen ein Atomverhältnis von Zirkonium zum ersten Seltenerdelement gleich oder grösser als 0,8 ist, und alle Oxide, die das zweite Seltenerdelement enthalten, Mischoxide des zweiten Seltenerdelements und von Zirkonium sind, in denen ein Atomverhältnis von Zirkonium zum zweiten Seltenerdelement gleich oder grösser als 0,8 ist, und der Abgasreinigungskatalysator (10) kein Mischoxid enthält, bei dem ein Atomverhältnis von Zirkonium zu einem Seltenerdelement kleiner als 0,8 ist und jedes Oxid nur ein Seltenerdelement als Metallelement enthält, und der Abgasreinigungskatalysator (10) nur das Mischoxid (21) und das Mischoxid (31) als Oxid enthält, das Seltenerdelement enthält.

2. Katalysator (10) nach Anspruch 1, **dadurch gekennzeichnet, dass** mindestens eines der ersten und zweiten Seltenerdelemente mindestens ein Element ausgewählt aus der Gruppe La, Ce, Pr, Nd, Pm, Sm, Eu, Gd, Tb, Dy, Ho, Er, Tm, Yb, Lu, Sc und Y ist.

3. Katalysator (10) nach Anspruch 1 oder 2, **dadurch gekennzeichnet, dass** das erste katalytische Metall (23) eines von Pt und Pd enthält und das zweite katalytische Metall (33) Rh enthält.

4. Katalysator (10) nach einem der Ansprüche 1 bis 3, **dadurch gekennzeichnet, dass** mindestens eine der ersten und zweiten Katalysatorträgerschichten (2. 3) weiterhin Aluminiumoxid (22, 32) enthält und ein Gewichtsverhältnis von Aluminiumoxid (22, 32) zu Mischoxid (21, 31) in der Katalysatorträgerschicht (2. 3) in einen Bereich von 1/200 bis 200/1 fällt.

5. Katalysator (10) nach einem der Ansprüche 1 bis 3, **dadurch gekennzeichnet, dass** die erste Katalysatorträgerschicht (2) ferner Aluminiumoxid (22) enthält, das Aluminiumoxid (22) das erste katalytische Metall (23) trägt und das Mischoxid (31) des zweiten Seltenerdelements und Zirkoniums das zweite katalytische Metall (33) trägt.

## Revendications

1. Catalyseur de purification des gaz d'échappement (10), **caractérisé en ce qu'**il comprend :
un substrat de support (1) ;
une première couche de support de catalyseur (2) formée sur le substrat de support (1) et contenant un oxyde composite (21) d'un premier élément des terres rares et de zirconium ;
un premier métal catalytique (23) supporté par la première couche de support de catalyseur (2) ;
une deuxième couche de support de catalyseur (3) formée sur la première couche de support de catalyseur (2) et contenant un oxyde composite (31) d'un deuxième élément des terres rares et de zirconium ; et
un deuxième métal catalytique (33) supporté par la deuxième couche de support de catalyseur (3) et différent du premier métal catalytique (23),
dans lequel tous les oxydes contenant le premier élément des terres rares sont des oxydes composites du premier élément des terres rares et de zirconium dans lesquels le rapport atomique du zirconium sur le premier élément des terres rares est supérieur ou égal à 0,8, et
tous les oxydes contenant le deuxième élément des terres rares sont des oxydes composites du deuxième élément des terres rares et de zirconium dans lesquels le rapport atomique du zirconium sur le deuxième élément des terres rares est supérieur ou égal à 0,8, et
le catalyseur de purification des gaz d'échappement (10) ne contient aucun oxyde composite dans lequel le rapport atomique du zirconium sur un élément des terres rares est inférieur à 0,8 et tout oxyde ne contenant qu'un élément des terres rares comme élément métallique, et
le catalyseur de purification des gaz d'échappement (10) ne contient que l'oxyde composite (21) et l'oxyde composite (31) sous forme d'oxyde contenant un élément des terres rares.

2. Catalyseur (10) selon la revendication 1, **caractérisé en ce qu'**au moins l'un des premier et deuxième éléments des terres rares est au moins un élément choisi dans le groupe constitué par La, Ce, Pr, Nd, Pm, Sm, Eu, Gd, Tb, Dy, Ho, Er, Tm, Yb, Lu, Sc et Y.

3. Catalyseur (10) selon la revendication 1 ou 2, **caractérisé en ce que** le premier métal catalytique (23) contient l'un de Pt et Pd et le deuxième métal catalytique (33) contient Rh.

4. Catalyseur (10) selon l'une des revendications 1 à 3, **caractérisé en ce qu'**au moins l'une des première et deuxième couches de support de catalyseur (2, 3) contient en outre de l'alumine (22, 32) et le rapport pondéral de l'alumine (22, 32) sur l'oxyde composite (21, 31) dans la couche de support de catalyseur (2, 3) se situe dans une plage allant de 1/200 à 200/1.

5. Catalyseur (10) selon l'une quelconque des revendications 1 à 3, **caractérisé en ce que** la première couche de support de catalyseur (2) contient en outre de l'alumine (22), l'alumine (22) supporte le premier métal catalytique (23), et l'oxyde composite (31) du deuxième élément des terres rares et de zirconium supporte le deuxième métal catalytique (33).
